# EUROPEAN PATENT SPECIFICATION

(11) **EP 2 466 300 B1**
(45) Date of publication and mention of the grant of the patent: **26.07.2017**
(21) Application number: 10195443.6
(22) Date of filing: 16.12.2010
(51) Int. Cl.: G01N 27/417, F02D 41/12, F02D 41/14

(54) **Method for adapting the signal measured by a lambda probe and corresponding adaptation system**
Methode zur Anpassung des Signals eines Lambda Sensors und entsprechendes Anpassungssystem
Méthode d'adaptation du signal d'une sonde lambda et un système d'adaptation correspondant

(43) Date of publication of application: 20.06.2012
(73) Proprietor: FCA Italy S.p.A., 10135 Torino (IT)
(72) Inventor: Masiero, Claudio, 13135, Torino (IT); Vennettilli, Nando, 13135, Torino (IT); Garofalo, Fabio, 13135, Torino (IT)
(74) Representative: Notaro, Giancarlo

(56) References cited:
- EP-A2- 1 586 889
- DE-A1- 10 227 177
- JP-A- 58 057 050
- US-A- 4 532 013
- US-B1- 6 227 033

## Description

### Field of the invention

The present invention refers to methods and systems for adapting the signal measured by a lambda probe operating in an exhaust line of an internal combustion engine of a vehicle, of the type comprising acquiring at the processing means, in particular an engine control unit, said measured signal and correcting values obtained from said signal measured by said lambda probe in an operating condition of the engine in which there are gases burnt in said exhaust line, through the phases of:
obtaining adaptation values from the signal measured by said lambda probe in a determined engine operating phase in which in said exhaust line there are no exhaust gases, and
comparing said values for adapting the measured signal with expected values for a reference oxygen concentration,
calculating an adaptation factor as a function of said adaptation values and expected values to be used in said correction of values obtained from said signal measured by said lambda probe in an operating condition of the engine in which there are exhaust gases.

### General technical drawback and description of the prior art

In modern internal combustion engines, in particular for motor vehicles, there is the need for reducing dispersions and the drifts of the components so as to minimize pollutant gas emissions, especially the formation of soot. This allows meeting the strict limits provided for by the laws in force, limiting the grade of smoke observable at the exhaust and where present, protect the components of the exhaust line, especially the particulate trap, against clogging.

The sensor referred to as lambda probe, which is positioned in the exhaust line and measures the concentration of oxygen in the exhaust gases, with the aim of monitoring the emissions and keeping them within the desired limits is used in the current engine control systems.

The measuring accuracy of the lambda probe, which must be guaranteed and maintained during the entire expected life of the component, even considering the ageing thereof, acquires considerable importance in order to perform control operations through the lambda probe.

Therefore, there are known solutions aimed at maintaining the measurement accuracy of the lambda probe, adapting the signal of the probe through corrections related to the varied conditions of the component or other elements which affect the operation of the lambda probe.

Generally, the term "adaptation procedure" is used to indicate a procedure for correlation between an oxygen concentration value measured by the lambda probe and an expected oxygen concentration value, such expected value being typically equivalent to 21%, i.e. the typical concentration of oxygen in the atmospheric air, such correlation procedure thus allowing correcting the measured values.

Known solutions, for example, on "on road" applications, thus mainly vehicles circulating on road intended for transporting goods or people, exploit the fact that conditions useful for adaptation arise when the engine is kept rotation by the inertia of the vehicle in absence of fuel injection; thus, the engine intakes pure air and conveys it to the exhaust eliminating the residues of exhaust gases. This condition, referred to as "cut-off" occurs frequently whenever the driver desires to slow the vehicle down and it represents an advantageous condition for acquiring a signal to be compared with a signal measured in a reference condition and thus calculating a correction value to be applied for adaptation.

On "off road" applications, i.e. works machinery, for example earth moving machinery, where the engine is not only intended for traction for driving the vehicle, but it is also used for supplying a drive torque to hydraulic actuators, the frequency and duration of the "cut-off" conditions is reduced considerably due to the different use. Thus, the infrequency by which these conditions occur for adapting the signal of the lambda probe makes maintaining the accuracy of the lambda probe along the entire life of the component difficult.

**Document** JP 05957050 A **discloses a method for adapting the signal measured by a lambda probe according to the preamble of claim 1.**

### Object of the invention

The object of the present invention is to overcome the drawback of the previously described prior art. In particular, the object of the present invention is to provide a method capable of operating efficiently even in applications on off-road motor vehicles or motor vehicles in which cut-off periods occur at a low frequency.

### Summary of the invention

The object of the present invention is attained by an adaptation method having all the characteristics listed at the beginning of the present description and further characterized in that said engine operating phase is an engine shut-off phase in which the fuel injection is at zero. The invention also regards a corresponding adaptation system.

### Brief description of the drawings

The invention shall now be described with reference to the attached drawings, provided purely by way of non-limiting example, wherein:
- figure 1 represents a schematic view of an engine architecture implementing the method according to the invention,
- figure 2 represents a state diagram illustrating operations of the method according to the invention;
- figure 3 represents a flow chart representing operations carried out in one of the states illustrated in figure 2.

### Detailed description of the invention

In brief, according to the invention there is provided for the reading of the signal emitted by said lambda probe in an engine operating phase in which in said exhaust line there are no exhaust gases, i.e. pure air is present, such engine operating phase corresponding to an engine cut-off phase in which the fuel injection into the engine is at zero. Actually, in such engine cut-off phase carried out by positioning fuel injection equivalent to zero, the rotations of the engine to stop convey pure air to the exhaust, in a manner similar to the cut-off condition, and thus in this phase it is possible to compare the measurement value of the lambda probe in absence of exhaust gases with the expected value corresponding to the reference oxygen concentration.

The method that operates under such engine cut-off phase to guarantee the accuracy of the lambda probe, in particular provides for:
keeping the lambda probe active and operating during the engine cut-off phase;
verifying the presence of air in the exhaust line by controlling the number of rotations of the engine in absence of injection.

The method also provides for minimizing the airflow at the exhaust by optimising the position of the actuators which control the air flow rate.

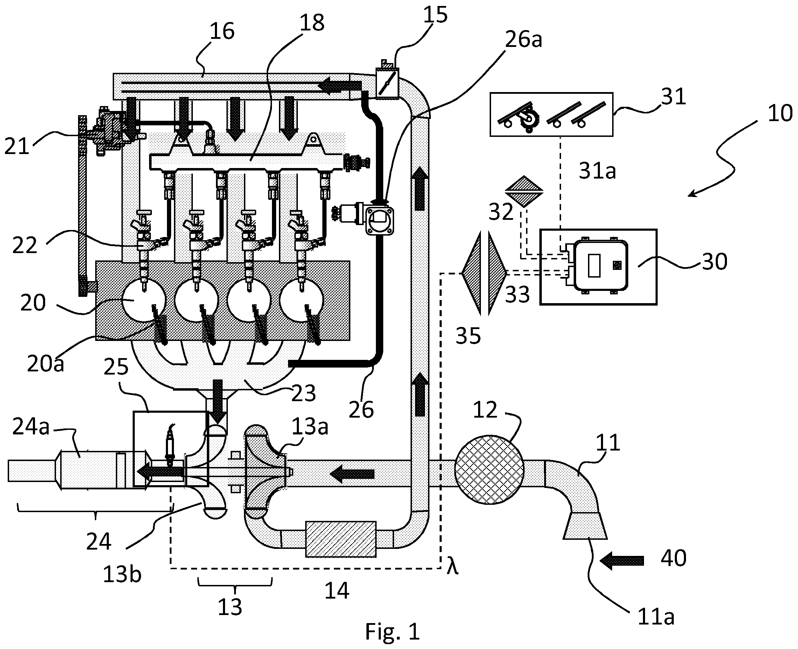

An internal combustion engine, indicated in its entirety with reference number 10, of the compression ignition type is schematically represented in figure 1 by way of example of an engine architecture implementing the method according to the invention. Such engine architecture is per se known.

Such internal combustion engine 10 comprises a conduit 11 for the intake air 40 provided with an inlet 11a downstream of which there is an air filter 12. A turbocharger unit, comprising a supercharger 13a downstream of the filter 12, followed by an intercooler 14 is thus indicated with 13. A throttle valve 15, of the electrical controlled type, which supplies to an intake manifold 16 which conveys air to a plurality of cylinders 20, provided with respective glow plugs 20a is also located on the intake conduit 11 downstream of the intercooler 14. A distribution manifold 18, the so-called common rail, which receives fuel from a fuel pump 21 to manage the flow of fuel to injectors 22 on the respective cylinders 20 according to the common rail injection technique is also provided for. An exhaust manifold 23 which is in communication with a turbine 13b of the turbocharger unit 13, which expands the exhaust gases towards a turbine exhaust line 24 is provided for downstream of such cylinders 20. Such exhaust line 24 comprises a unit for the aftertreatment of exhaust gases 24a, upstream of which there is arranged a lambda probe 25, in particular a linear lambda probe, comprising a respective heater for providing ideal work conditions therefor. Such probe 25 during the operation of the engine 10, during fuel injection by means injectors 22, supplies a measurement signal λ representing the oxygen concentration within the exhaust gases in the exhaust line 24 to an engine control unit 30 to control the emissions. On the exhaust manifold 23 there is also arranged a gas recirculation line 26 which places it in communication with the intake manifold through an EGR (Exhaust Gas Recirculation) valve 26a for the recirculation of the exhaust gases and prevention of the formation of nitrogen oxides.

The engine electronic control unit 30 manages the functionalities of the internal combustion engine 10, receiving signals from sensors arranged in the engine and in other parts of the vehicle and controlling the actuators of components of such engine 10, such as the throttle valve 15, the pump 20 or the injectors 22 according to the patterns for controlling the engine 10 provided therein. As mentioned, the engine control unit 30 also controls the heating and the operation of the lambda probe 25. Controls, such as acceleration, brakes and clutch pedals on the vehicle and other devices adapted to convey signals to the engine control unit 30 which carries out the corresponding actuations are then indicated with 31 in figure 1. The engine control unit 30 receives such signals through a control signal line 31a and it is generally in two-directional communication with control and display peripherals in the vehicle through a signal line 32 which can also correspond to the line 31a.

In figure 1 there is also shown a two-directional control signal line 33 which generally serves for exchanging signals with sensors and actuators. Through such signal control line 33 there reaches, for example to the control unit 30 through the connection 35, the measurement signal λ representing the oxygen concentration measured by the lambda probe 25. In figure 1 there is shown - solely for the sake of simplicity - such connection 35 for acquiring such measurement signal λ, but, as better described in detail hereinafter, the parameters of the engine 10 that are acquired, in a per se known manner, through the control signal line 33, include an operating temperature of the lambda probe 25, a temperature of the coolant of the engine 10, the atmospheric pressure and the number of revolutions of the engine 10 which, as better described hereinafter, are used in the embodiments of the method according to the invention.

Regarding the internal combustion engine 10 operating under the control of the engine control unit 30 there can be generally identified - regarding the present description - the following operating conditions of the engine 10:
- the switch-on state of the engine 10,
- shut-off phase of the engine 10, in which the engine is shut-off by zeroing the amount of fuel injected,
- driving-Cycle, corresponding to the engine operating cycle between a switch-on and shut-off phase,
- engine cut-off phase, in which the fuel injection is equivalent to zero and the engine regime is driven by the inertia of the vehicle.

During the cut-off or shut-off phases, as mentioned, there is no fuel injection and the engine 10 intakes fresh air through the intake line 11 and conveys it to the exhaust line 24.

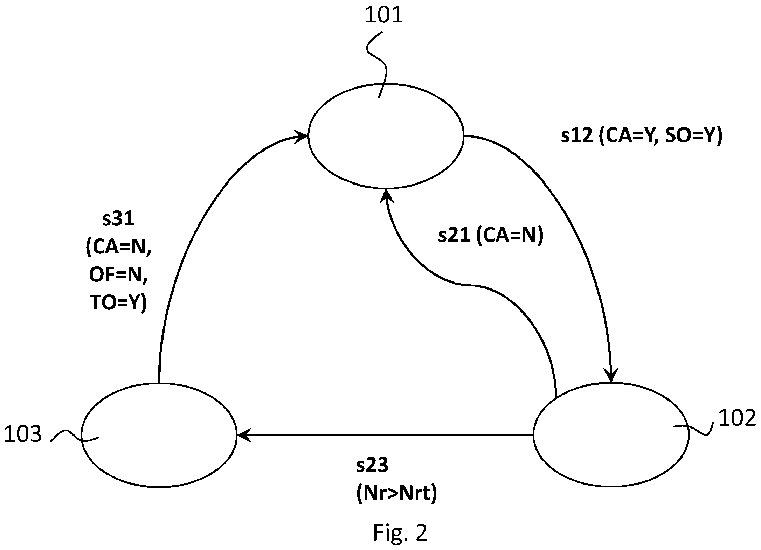

Figure 2 shows a state diagram representing the states acquired by the engine control unit 30 to implement the adaptation method according to the invention.

An inactive adaptation state, in which the engine control unit 30 monitors a set of enabling conditions for the adaptation of the signal of the lambda probe 25, verified by the control unit 30 through the control line 33, coming from corresponding sensors arranged in the engine 10 is indicated with reference 101. Such set of conditions for enabling adaptation comprises conditions indicating the correct operation of the probe, compatible with the performance of the adaptation procedure, for example:
a) the lambda probe 25 is operative and error-free;
b) the heater of the probe 25 is active to keep the temperature at a determined operating temperature, for example at 780°C.

Such set of conditions for enabling the adaptation of the signal of the lambda probe 25 also comprises conditions indicating the correct operation of the engine compatible with the performance of the adaptation procedure, for example:
c) successful occurrence of a predetermined minimum number of engine stops, completed without operating the adaptation of the lambda probe 25 according to the method described herein, i.e. an adaptation in shut-off phase. For example, such predetermined minimum number of engine stops is comprised between 3 and 5;
d) no adaptation has been carried out during the cut-off phase in the current driving cycle;
e) the engine 10 runs at a regime with the coolant temperature exceeding a determined temperature value, for example 60°C;
f) the atmospheric pressure is greater than a determined minimum pressure value;
g) at the beginning of the shut-off phase the probe 25 detects an oxygen concentration value, exceeding a determined minimum level.

In general one or more of the previously described conditions for enabling the probe 25 and the engine 10 may occur. In a preferred version of the method according to the invention, all such enabling conditions from a) to g) occur.

A stand-by state after request, which is reached from the active state 101 according to a transition indicated with s12 in figure 2 is indicated with reference 102. Such transition s12 occurs if the set of enabling conditions is occurs and if there is a request to shut-off the engine by the user. In figure 2 the occurrence of such condition is represented by an enabling flag CA set in the control unit 30 at an affirmative value Y after receiving corresponding signals from the sensors that monitor the required enabling conditions. Similarly, a shut-off flag SO represents the detection - by the engine control unit 30 - of the engine shut-off by the user. In such stand-by state 102 after request there is provided for keeping the lambda probe 25 active to supply the measurement signal λ to the engine control unit 30. A transition s21 to return to the inactive adaptation state 102 is operated only when the set of conditions for enabling the adaptation of the signal of the lambda probe 25 no longer occurs, i.e. the enabling flag CA is set at a negative value N.

An active adaptation state in which the adaptation of the signal of the lambda probe 25 is carried out, obtaining the oxygen concentration value corresponding to the measurement signal λ of the lambda probe 25 and comparing an expected oxygen concentration value is indicated with reference 103. Such comparison preferably occurs in a control unit 30, or the data can be sent by the control unit 30 to a processor arranged elsewhere in the vehicle to complete the processing.

The active adaptation state 103 is reached from the stand-by state 102 after a request through a transition s23: Such transition s23 occurs if in the previous requested stand-by state 102 it is counted-through a corresponding engine rotations sensor not shown in the figures - that the engine 10 has performed a given number of rotations or revolutions Nr, without fuel injection, greater or equal to a threshold value Nrt sufficient to determine the presence of air alone in the exhaust line 24. Such threshold value Nrt can for example be calculated empirically by testing the engine 10. Such empirical calculations, by testing the engine and through considerations on "worst case" configurations allow estimating the threshold value Nrt for the estimated number of revolutions for example 3 or 4. However, such value may vary in that the number of revolutions is a parameter influenced by the position of the lambda probe 25 with respect to the engine, in particular by the distance from the engine, and by the type of motor vehicle on which the engine is installed. Such position of the probe 25 is important for defining the volume of the pipes between the engine and the probe 25 and thus the value of the flow rate of pure air required to clean the area. According to a variant, it is possible to calculate the volume of the exhaust system and thus the required number of rotations, in case the data of the internal volumes of the turbine are known.

The type of motor vehicle is instead important due to the fact that depending on the configuration, there could be different degrees of resistant torques connected to the engine that could affect the number of rotations of the engine during shut-off (for example, extremely high resistant torques stop the engine within a few rotations).

A transition s31 to return from the active state 103 to the inactive state 101 is carried out when the enabling conditions CA no longer occur, i.e. the enabling flag passes to the negative value, and/or if the time out flag TO indicates that a determined period of time has elapsed, for example a period of time long enough to allow measuring the concentration of oxygen. The transition s31 returning from the inactive state 101 can be carried out only when an actuator flag OF, set by the control unit 30 according to the information regarding the positions of the actuators, indicates that the position of the actuators is not correct, in particular that the throttle valve 15 is not fully open. In particular, it is verified whether the actuators involved, throttle valve 15 and EGR valve 26a may have moved from the reference position set at the beginning of the procedure. Actually, for example, it may happen that a request having greater priority may move the actuator (learning cycles and periodical cleaning operations) or some malfunction could move a component. Pumps and injectors are not monitored in this phase.

Shutting the throttle valve 15 again is not generally required, given that with the engine off the fresh air flow from outside, which can affect the pressure and temperature conditions in the area of the probe 25 is actually interrupted, while the pressure with the engine off is constant and equivalent to the atmospheric one (and it is constant). It should also be observed that regarding the temperature in the area of the probe 25, the thermal inertia of the exhaust pipes, usually made of metal, ensures that there are no considerable temperature variations over a sufficiently brief period of time for example a few seconds.

The method according to the invention also provides for compensating the effect of the temperature on the reading of the signal. Temperature compensation, in the area of the probe, procedure per se known in the prior art, is important for the correct reading of the component. In the method according to the invention, in case of presence of considerable temperature variations, when shutting the engine off, the thermal inertia of the metal guarantees the absence of considerable temperature variations. On the contrary, in case of high flow of fresh air, then the compensation becomes considerable in that the high flow cools the exhaust.

As mentioned, the method also provides for minimising the airflow to the exhaust optimising the position of the actuators which control the air flow rate.

The air flow rate is maximised by imparting, upon request to shut the engine off, reference positions to the actuators which control the air flow rate. Such actuators in particular comprise the throttle valve 15, to which the fully open position is imparted. According to a preferred version, also the EGR valve 26a, to which - on the contrary - the fully shut position is imparted, is controlled.

The throttle valve 15 is opened to increase the airflow that can be taken in from the area of the intercooler 14.

On the contrary, the EGR valve 26a is shut to prevent a part of the clean air that the engine is pushing towards the lambda probe 25 from returning through the gas recirculation line 26 upon intake thus reducing the flow of clean air that actually reaches the lambda probe 25.

Keeping the throttle valve 15 open when shutting off actually allows extending the shut-off phase by a few engine revolutions. This slight increase of the number of revolutions when shutting off combined with the increase of the air flow rate, allows carrying out the adaptation procedure easily.

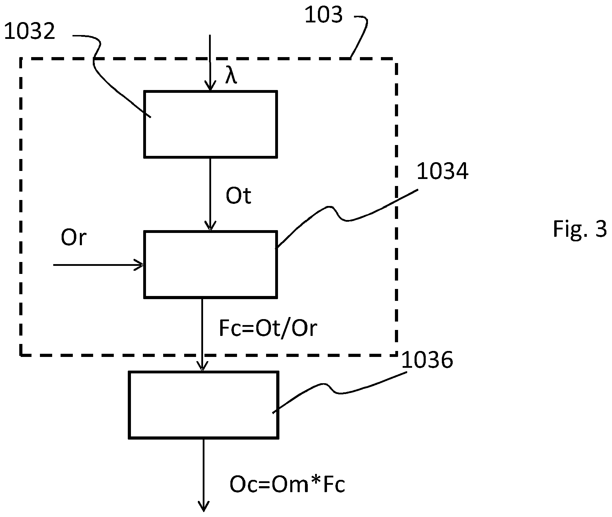

Figure 3 shows a flow chart which details the adaptation operation carried out during the active adaptation state 103.

The reading of the measurement signal λ of the probe 25 - during the shut-off phase - which provides adaptation values Ot representing the concentration of oxygen in the exhaust line 24 during such shut-off phase is carried out in stage 1032. Comparison with an expected value Or of oxygen concentration, i.e. preferably a 21% oxygen concentration, which corresponds to the oxygen concentration normally present in the atmosphere, is carried out in stage 1034. Such comparison operation, by way of example, performs comparison between the adaptation values Ot in the shut-off phase and the reference value Or to obtain a correction factor Fc. The value of such correction factor Fc, measured within a determined time range in which the engine control unit 30 remains in the active adaptation state 103, is filtered to avoid instantaneous disturbances.

In a stage 1036, usually subsequent to exit from the active adaptation state 103, such correction factor Fc, preferably stored in the engine control unit 30, is applied to the obtained values Om by the signal measured by the probe 25 during the phases in which there is fuel injection i.e. there are exhaust gases in the exhaust line 24, for example as a multiplication factor to obtain corrected values Oc of oxygen concentration, which consider the variations of the response of the lambda probe 25, for example due to ageing.

Thus, the advantages of the proposed solution are apparent from the previous description.

The method according to the invention performs the correction during the engine shut-off phase, not with regime exceeding a threshold, thus the shut-off phase provides for having a regime tending to zero and exploits the last revolutions of the engine before stopping to clean the exhaust line. At the same time, the method according to the invention allows operating in a phase, the shut-off one, in which there occurs a regime lower (and not higher like in the cut-off phase) than the so-called minimum rev regime.

The method according to the invention advantageously allows adopting a method for calculating the standard correction factor, as the ratio between the measured value and the expected value of the concentration of oxygen, filtered to avoid instantaneous disturbances.

Advantageously, the method according to the invention, by performing the phase of reading the signal of the lambda probe for adaptation during the engine shut-off phase, does not require shutting the throttle valve again, in that, with the engine off, the flow of fresh air that could lead to varying the pressure and temperature conditions in the area of the probe is interrupted, while the pressure is equivalent to the atmospheric one. Furthermore, advantageously during the shut-off phase the thermal inertial in the exhaust pipes, usually made of metal, ensures that there are no considerable temperature variations over a sufficiently brief period of time for example a few seconds.

Obviously, the construction details and the embodiments may widely vary with respect to what has been described and without departing from the scope of protection of the present invention, as defined in the attached claims.

The method according to the invention can be applied to linear lambda probes, as described, but also other sensors used for measuring oxygen concentration such as switching probes and NOx sensors.

## Claims

1. Method for adapting the signal (λ) measured by a lambda probe (25) for detecting the concentration of oxygen operating in an exhaust line (24) of an internal combustion engine (10) of a vehicle, of the type comprising acquiring (35, 33) in processing means (30), in particular in an engine control unit, said measured signal (λ) and performing a correction of values (Om) obtained from said signal (λ) measured by said lambda probe (25) in an operating condition of the engine (19) in which there are exhaust gases in said exhaust line (24) through the phases of:
obtaining (1032) adaptation values (Ot) from the signal (λ) measured by said lambda probe (25) in a determined engine operating phase (10) wherein in said exhaust line (24) there are no exhaust gases, and
comparing (1034) said adaptation values (Ot) of the measured signal (λ) with expected values (Or) for a reference oxygen concentration,
calculating (1036) an adaptation factor (Fc) as a function of said adaptation values (Ot) and expected values (Or) to be used in said operation for correcting values (Or) obtained from said signal (λ) measured by said lambda probe (25) in an operating condition of the engine (19) in which there are exhaust gases,
**characterised in that**
said operation (1032) for obtaining adaptation values (Ot) from the signal (λ) measured by said lambda probe (25) in a determined engine operating phase (10) wherein in said exhaust line (24) there are no exhaust gases is carried out in a phase (SO) for shutting off the engine (10) in which the engine (10) is performing rotations and wherein the injection (21, 22) of fuel is at zero, and **in that** said method comprises, during said phase (SO) of shutting off the engine (10), reaching a stand-by operating state (102) comprising keeping said lambda probe (25) active and operative, in said stand-by state (102) being performed the measurement of a number of rotations (Nr) of the engine (10) occurring in absence of injection and comparing said number of rotations with a threshold value (Nrt) indicating the presence of air alone in the exhaust line (24) to pass (s23) to an active state (103) in which there is carried out said operation (1032) for obtaining adaptation values (Ot) from the signal (λ) measured by said lambda probe (25) in a determined engine operating phase (10) wherein in said exhaust line (24) there are no exhaust gases.

2. Method according to claim 1, **characterised in that** it further comprises minimising an airflow in the exhaust line (24) optimising the position of actuators (15) which control the air flow rate.

3. Method according to claim 2, **characterised in that** said operation for minimising an airflow in the exhaust line (24) comprises arranging the throttle valve at a full open position and an EGR valve (26a) at a full shut position.

4. Method according to claim 2 or 3, **characterised in that** it comprises passing to said stand-by state (102) after occurrence of a set of adaptation enabling conditions (CA) indicating an operation of the probe (25), compatible with the performance of the adaptation operation.

5. Method according to claim 4, **characterised in that** said set of adaptation enabling conditions (CA) comprises verifying whether a heater for said probe (25) is active for keeping the temperature of the probe (25) at a determined operating temperature.

6. Method according to claim 4 or 5, **characterised in that** said set of adaptation enabling conditions (CA) comprises verifying the occurrence of a predetermined minimum number of engine stops completed without activating said operation for adapting the lambda probe (25) and/or whether an adaptation has been carried out during the cut-off phase in a current driving cycle.

7. Method according to any of claims 4 to 6, **characterised in that** it comprises verifying one or more of the following enabling conditions (CA):
- the engine (10) runs at a regime with the coolant temperature exceeding 60°C;
- the atmospheric pressure exceeds a minimum predetermined level;
- the lambda probe (25) detects a minimum concentration of oxygen at the beginning of the shut-off phase, exceeding a determined minimum level.

8. Method according to any of the preceding claims 1 to 7, **characterised in that** it comprises exiting (s31) from said active adaptation phase (103) in case of occurrence of one or more of the following conditions:
- the enabling conditions (CA) are no longer met;
- a determined period of time (TO) has elapsed,
- the position of actuators (15) of the engine (10) defers from a correct position (OF), in particular the throttle valve (15) is not fully open

9. Method according to any of the preceding claims, **characterised in that** said vehicle is an 'off road' vehicle or works machinery.

10. System for adapting the signal (λ) measured by a lambda probe (25) operating in an exhaust line (24) of an internal combustion engine (10) of a vehicle comprising an engine control unit configured for acquiring (35, 33) said measured signal (λ) and performing a correction of values (Om) obtained from said signal (λ) measured by said lambda probe (25) in an operating condition of the engine in which there are gases burnt in said exhaust line (24), **characterised in that** said engine control unit (30) is configured for operating according to the phases of the method according to any of claims 1 to 9.

11. Adaptation system according to claim 10, **characterised in that** said lambda probe (25) is a linear lambda probe.

## Patentansprüche

1. Verfahren zum Anpassen des Signals (A), das von einer Lambda-Sonde (25) gemessen wird, um die Konzentration von Sauerstoff zu erfassen, der in einer Abgasleitung (24) eines Verbrennungsmotors (10) eines Fahrzeugs wirkt, des Typs, der umfasst, dass in einer Verarbeitungseinrichtung (30), insbesondere in einer Motor-Steuereinheit, das gemessene Signal (λ) bezogen wird (35, 33) und eine Korrektur von Werten (Om), die anhand des Signals (λ) ermittelt werden, das von der Lambda-Sonde (25) in einem Betriebszustand des Motors (19) gemessen wird, in dem Abgase in der Abgasleitung (24) vorhanden sind, über die folgenden Phasen durchgeführt wird:
Ermitteln (1032) von Anpassungs-Werten (Ot) anhand des Signals (λ), das von der Lambda-Sonde (25) in einer bestimmten Motor-Betriebsphase (10) gemessen wird, in der keine Abgase in der Abgasleitung (24) vorhanden sind, und
Vergleichen (1034) der Anpassungs-Werte (Ot) des gemessenen Signals (λ) mit erwarteten Werten (Or) für eine Bezugs-Sauerstoffkonzentration,
Berechnen (1036) eines Anpassungs-Faktors (Fc) als eine Funktion der Anpassungs-Werte (Ot) des gemessenen Signals (λ) und erwarteter Werte (Or), der in dem Vorgang zum Korrigieren von Werten (Or) verwendet wird, die anhand des Signals (λ) ermittelt werden, das von der Lambda-Sonde (25) in einem Betriebszustand des Motors (19) gemessen wird, in dem Abgase vorhanden sind,
**dadurch gekennzeichnet, dass**
der Vorgang (1032) zum Ermitteln von Anpassungs-Werten (Ot) anhand des Signals (λ), das von der Lambda-Sonde (25) in einer bestimmten Motor-Betriebsphase (10) gemessen wird, in der keine Abgase in der Abgasleitung (24) vorhanden sind, in einer Phase (SO) zum Abschalten des Motors (10) ausgeführt wird, wenn der Motor (10) Umdrehungen durchführt, und in der die Einspritzung (21, 22) von Kraftstoff bei Null liegt, und dass das Verfahren umfasst, dass während der Phase (SO) zum Abschalten des Motors (10) ein Bereitschafts-Betriebszustand (102) erreicht wird, der umfasst, dass die Lambda-Sonde (25) aktiv und funktionsfähig gehalten wird, und in dem Bereitschaftszustand (102) die Messung einer Anzahl von Umdrehungen (Nr) des Motors (10) durchgeführt wird, die beim Nichtvorhandensein von Einspritzung auftreten, und die Anzahl von Umdrehungen mit einem Schwellenwert (Nrt) verglichen wird, der das ausschließliche Vorhandensein von Luft in der Abgasleitung (24) anzeigt, und zu einem aktiven Zustand (103) übergegangen wird (s23), in dem der Vorgang (1032) zum Ermitteln von Anpassungs-Werten (Ot) anhand des Signals (λ) ausgeführt wird, das von der Lambda-Sonde (25) in einer bestimmten Motor-Betriebsphase (10) gemessen wird, in der keine Abgase in der Abgasleitung (24) vorhanden sind.

2. Verfahren nach Anspruch 1, **dadurch gekennzeichnet, dass** es des Weiteren umfasst, dass ein Luftstrom in der Abgasleitung (24) minimiert wird und die Position von Stellgliedern (15) optimiert wird, die die Luft-Strömungsgeschwindigkeit steuern.

3. Verfahren nach Anspruch 2, **dadurch gekennzeichnet, dass** der Vorgang zum Minimieren eines Luftstroms in der Abgasleitung (24) umfasst, dass die Drosselklappe in eine vollständig geöffnete Position versetzt wird und ein AGR-Ventil (26a) in eine vollständig geschlossene Position versetzt wird.

4. Verfahren nach Anspruch 2 oder 3, **dadurch gekennzeichnet, dass** es umfasst, dass nach dem Auftreten einer Gruppe von Anpassungs-Aktivierungsbedingungen (CA), die eine Funktion der Sonde (25) anzeigen, und die kompatibel mit der Durchführung des Anpassungs-Vorgangs sind, zu dem Bereitschaftszustand (102) übergegangen wird.

5. Verfahren nach Anspruch 4, **dadurch gekennzeichnet, dass** die Gruppe von Anpassungs-Aktivierungsbedingungen (CA) umfasst, dass geprüft wird, ob eine Heizeinrichtung für die Sonde (25) aktiv ist und die Temperatur der Sonde (25) auf einer vorgegebenen Betriebstemperatur hält.

6. Verfahren nach Anspruch 4 oder 5, **dadurch gekennzeichnet, dass** die Gruppe von Anpassungs-Aktivierungsbedingungen (CA) umfasst, dass geprüft wird, ob eine vorgegebene minimale Anzahl von Motor-Abschaltungen aufgetreten ist, die ohne Aktivieren des Vorgangs zum Anpassen der Lambda-Sonde (25) abgeschlossen worden sind, und/oder ob eine Anpassung während der Abschalt-Phase in einem aktuellen Fahr-Zyklus ausgeführt worden ist.

7. Verfahren nach einem der Ansprüche 4 bis 6, **dadurch gekennzeichnet, dass** es umfasst, dass eine oder mehrere der folgenden Aktivierungsbedingungen (CA) geprüft wird/werden:
- der Motor (10) läuft in einem Betriebszustand, in dem die Kühlmitteltemperatur 60°C übersteigt;
- der atmosphärische Druck übersteigt einen minimalen vorgegebenen Pegel;
- die Lambda-Sonde (25) erfasst eine minimale Konzentration von Sauerstoff zum Beginn der Abschalt-Phase, die einen bestimmten minimalen Pegel übersteigt.

8. Verfahren nach einem der vorangehenden Ansprüche 1 bis 7, **dadurch gekennzeichnet, dass** es umfasst, dass beim Auftreten einer oder mehrerer der folgenden Bedingungen die aktive Anpassungs-Phase (103) verlassen wird (s31):
- die Aktivierungsbedingungen (CA) sind nicht mehr erfüllt;
- ein vorgegebener Zeitraum (TO) ist verstrichen,
- die Position von Stellgliedern (15) des Motors (10) weicht von einer korrekten Position (OF) ab, insbesondere ist die Drosselklappe (15) nicht vollständig geöffnet.

9. Verfahren nach einem der vorangehenden Ansprüche, **dadurch gekennzeichnet, dass** das Fahrzeug ein Geländefahrzeug oder eine Arbeitsmaschine ist.

10. System zum Anpassen des Signals (λ), das von einer Lambda-Sonde (25) gemessen wird, die in einer Abgasleitung (24) eines Verbrennungsmotors (10) eines Fahrzeugs arbeitet, das eine Motor-Steuereinheit umfasst, die so konfiguriert ist, dass sie das gemessene Signal (λ) bezieht (35, 33) und eine Korrektur von Werten (Om) durchführt, die anhand des Signals (λ) ermittelt werden, das von der Lambda-Sonde (25) in einem Betriebszustand des Motors gemessen wird, in dem in der Abgasleitung (24) verbrannte Gase vorhanden sind, **dadurch gekennzeichnet, dass** die Motor-Steuereinheit (30) so konfiguriert ist, dass sie entsprechend den Phasen des Verfahrens nach einem der Ansprüche 1 bis 9 arbeitet.

11. Anpassungs-System nach Anspruch 10, **dadurch gekennzeichnet, dass** die Lambda-Sonde (25) eine lineare Lambda-Sonde ist.

## Revendications

1. Procédé d'adaptation du signal (λ) mesuré par une sonde lambda (25) pour détecter la concentration d'oxygène fonctionnant dans une conduite d'échappement (24) d'un moteur à combustion interne (10) d'un véhicule, du type comprenant l'acquisition (35, 33) dans un moyen de traitement (30), en particulier dans une unité de commande moteur, dudit signal mesuré (λ) et la réalisation d'une correction de valeurs (Om) obtenues à partir dudit signal (λ) mesuré par ladite sonde lambda (25) dans une condition de fonctionnement du moteur (19) dans laquellel y a des gaz d'échappement dans ladite conduite d'échappement (24) à travers les phases :
d'obtention (1032) de valeurs d'adaptation (Ot) à partir du signal (λ) mesuré par ladite sonde lambda (25) dans une phase de fonctionnement de moteur déterminée (10) dans laquelle il n'y a pas de gaz d'échappement dans ladite conduite d'échappement (24), et
de comparaison (1034) desdites valeurs d'adaptation (Ot) du signal mesuré (λ) avec des valeurs attendues (Or) pour une concentration d'oxygène de référence,
de calcul (1036) d'un facteur d'adaptation (Fc) en fonction desdites valeurs d'adaptation (Ot) et desdites valeurs attendues (Or) à utiliser dans ladite opération de correction des valeurs (Or) obtenues à partir dudit signal (λ) mesuré par ladite sonde lambda (25) dans une condition de fonctionnement du moteur (19) dans laquelle il y a des gaz d'échappement,
**caractérisé en ce que**
ladite opération (1032) d'obtention de valeurs d'adaptation (Ot) à partir du signal (λ) mesuré par ladite sonde lambda (25) dans une phase de fonctionnement de moteur déterminée (10) dans laquelle il n'y a pas de gaz d'échappement dans ladite conduite d'échappement (24), est effectuée dans une phase (SO) pour arrêter le moteur (10) où le moteur (10) effectue des rotations et où l'injection (21, 22) de carburant est à zéro, et **en ce que** ledit procédé comprend, pendant ladite phase (SO) d'arrêt du moteur (10), l'accession à un état de fonctionnement d'attente (102) comprenant le maintien de ladite sonde lambda (25) active et fonctionnelle, dans ledit état d'attente (102), en réalisant la mesure d'un nombre de rotations (Nr) du moteur (10) se produisant en l'absence d'injection et en comparant ledit nombre de rotations avec une valeur seuil (Nrt) indiquant la présence d'air seul dans la conduite d'échappement (24) pour passer (s23) à un état actif (103) dans lequel est effectuée ladite opération (1032) d'obtention de valeurs d'adaptation (Ot) à partir du signal (λ) mesuré par ladite sonde lambda (25) dans une phase de fonctionnement de moteur déterminée (10) dans laquelle il n'y a pas de gaz d'échappement dans ladite conduite d'échappement (24).

2. Procédé selon la revendication 1, **caractérisé en ce qu'**il comprend en outre une minimisation d'un flux d'air dans la conduite d'échappement (24) optimisant la position d'actionneurs (15) qui régulent le débit d'air.

3. Procédé selon la revendication 2, **caractérisé en ce que** ladite opération pour minimiser un flux d'air dans la conduite d'échappement (24) comprend l'agencement du papillon des gaz à une position d'ouverture totale et d'une soupape de recirculation des gaz d'échappement (26a) à une position de fermeture totale.

4. Procédé selon la revendication 2 ou 3, **caractérisé en ce qu'**il comprend le passage audit état d'attente (102) après l'apparition d'un ensemble de conditions d'activation d'adaptation (CA) indiquant une opération de la sonde (25), compatible avec la réalisation de l'opération d'adaptation.

5. Procédé selon la revendication 4, **caractérisé en ce que** ledit ensemble de conditions d'activation d'adaptation (CA) comprend la vérification si un dispositif de chauffage pour ladite sonde (25) est actif pour maintenir la température de la sonde (25) à une température de fonctionnement déterminée.

6. Procédé selon la revendication 4 ou 5, **caractérisé en ce que** ledit ensemble de conditions d'activation d'adaptation (CA) comprend la vérification de l'apparition d'un nombre minimal prédéterminé d'arrêts de moteur achevés sans activation de ladite opération d'adaptation de la sonde lambda (25) et/ou si une adaptation a été effectuée pendant la phase de coupure dans un cycle de conduite actuel.

7. Procédé selon l'une des revendications 4 à 6, **caractérisé en ce qu'**il comprend une vérification d'une ou plusieurs des conditions d'activation suivantes (CA) :
- le moteur (10) fonctionne à un régime ayant une température de liquide de refroidissement dépassant 60°C ;
- la pression atmosphérique dépasse un niveau minimal prédéterminé ;
- la sonde lambda (25) détecte une concentration minimale d'oxygène au début de la phase d'arrêt, dépassant un niveau minimal déterminé.

8. Procédé selon l'une des revendications précédentes 1 à 7, **caractérisé en ce qu'**il comprend une sortie (s31) de ladite phase d'adaptation active (103) en cas d'apparition d'une ou de plusieurs des conditions suivantes :
- les conditions d'activation (CA) ne sont plus remplies ;
- une durée déterminée (TO) s'est écoulée,
- la position des actionneurs (15) du moteur (10) diffère d'une position correcte (OF), en particulier le papillon des gaz (15) n'est pas totalement ouvert.

9. Procédé selon l'une des revendications précédentes, **caractérisé en ce que** ledit véhicule est un véhicule hors route ou un engin de chantier.

10. Système d'adaptation du signal (λ) mesuré par une sonde lambda (25) fonctionnant dans une conduite d'échappement (24) d'un moteur à combustion interne (10) d'un véhicule comprenant une unité de commande moteur configurée pour acquérir (35, 33) ledit signal mesuré (λ) et pour réaliser une correction de valeurs (Om) obtenues à partir dudit signal (λ) mesuré par ladite sonde lambda (25) dans une condition de fonctionnement du moteur où des gaz sont brûlés dans ladite conduite d'échappement (24), **caractérisé en ce que** ladite unité de commande moteur (30) est configurée pour fonctionner selon les phases du procédé selon l'une des revendications 1 à 9.

11. Système d'adaptation selon la revendication 10, **caractérisé en ce que** ladite sonde lambda (25) est une sonde lambda linéaire.
